# EUROPÄISCHE PATENTSCHRIFT

(11) **EP 4 402 395 B1**
(45) Veröffentlichungstag und Bekanntmachung des Hinweises auf die Patenterteilung: **31.12.2025**
(21) Anmeldenummer: 22772982.9
(22) Anmeldetag: 06.09.2022
(51) Int. Cl.: F16H 57/00, F16H 57/028, F16H 1/28, B60K 17/24, F16H 57/021, F16H 1/46

(54) **PLANETENGETRIEBE MIT EINER EINTREIBENDEN WELLE UND EINER ERSTEN SONNE**
PLANETARY-GEAR MECHANISM WITH A DRIVING SHAFT AND A FIRST SUN GEAR
MÉCANISME D'ENGRENAGE PLANÉTAIRE DOTÉ D'UN ARBRE D'ENTRAÎNEMENT ET D'UNE PREMIÈRE ROUE SOLAIRE

(30) Priorität: 16.09.2021 DE 102021004680
(43) Veröffentlichungstag der Anmeldung: 24.07.2024
(73) Patentinhaber: SEW-EURODRIVE GmbH & Co. KG, 76646 Bruchsal (DE)
(72) Erfinder: LUTZ, Markus, 68794 Oberhausen-Rheinhausen (DE); LÖFFEL, Martin, 76327 Pfinztal (DE)
(86) Internationale Anmeldenummer: PCT/EP2022/074707
(87) Internationale Veröffentlichungsnummer: WO 2023/041371

(56) Entgegenhaltungen:
- DE-A1- 2 558 093
- DE-A1- 3 516 604
- JP-A- H0 776 233
- US-A- 5 370 014

## Beschreibung

Die Erfindung betrifft ein Planetengetriebe mit einer eintreibenden Welle und einer ersten Sonne.

Es ist allgemein bekannt, dass ein Planetengetriebe eine eintreibende Welle und eine abtreibende Welle aufweist.

Aus der DE 10 2019 006 068 A1 ist ein Getriebe mit zumindest einer ersten und einer zweiten Planetengetriebestufe bekannt.

Aus der DE 35 21 020 A1 ist ein Planetenträger für ein einer Bergwerksmaschine als Untersetzungsgetriebe dienendes Planetengetriebe bekannt.

Aus der CN 2 00 968 385 Y ist ein Windkraftwerk mit Getriebe bekannt.

**Aus der** US 5 370 014 A **ist als nächstliegender Stand der Technik ein Fahrzeuggetriebe bekannt.**

**Aus der** JP H07 76233 A **ist ein Getriebe mit Wellenaufnahmestruktur bekannt.**

**Aus der** DE 35 16 604 A1 **ist ein Planetengetriebe bekannt.**

**Aus der** DE 25 58 093 A1 **ist ein Planetengetriebe mit Planetenrädern bekannt, deren Profilverschiebung stetig veränderlich ist.**

Der Erfindung liegt daher die Aufgabe zugrunde, eine hohe Standzeit des Planetengetriebes zu erreichen.

Erfindungsgemäß wird die Aufgabe bei dem Planetengetriebe nach den in Anspruch 1 angegebenen Merkmalen gelöst.

Wichtige Merkmale der Erfindung bei dem Planetengetriebe mit einer eintreibenden Welle und einer ersten Sonne sind, dass die erste Sonne mit der eintreibenden Welle drehfest verbunden ist,
wobei die erste Sonne einen Zapfenabschnitt, insbesondere Wellenzapfen, aufweist,
wobei eine Schraube in eine Gewindebohrung des Zapfenabschnitts eingeschraubt ist,
wobei der Schraubenkopf auf ein Plattenteil drückt, das über eine Federvorrichtung oder über eine Federvorrichtung und mindestens eine Distanzscheibe auf den Zapfenabschnitt drückt,
wobei das Plattenteil, insbesondere an seiner von der Federvorrichtung abgewandten Seite, an der eintreibenden Welle anliegt und/oder die eintreibende Welle zumindest zeitweise berührt.

Von Vorteil ist dabei, dass eine hohe Standzeit erreichbar ist. Denn durch das elastisch vorgespannte Plattenteil werden nicht nur Axialstöße von der eintreibenden Welle zu ersten Sonne gedämpft übertragen, sondern auch ein Kantentragen der im Eingriff stehenden Verzahnungen, insbesondere der im Eingriff miteinander sich befindenden Verzahnung der ersten Sonne und des ersten Planetenrads, verhindert. Denn mittels des Plattenteils ist auch die axiale Positionierung der ersten Sonne zur eintreibenden Welle bewirkbar. Somit ist aber auch die axiale Lage der ersten Sonne zum ersten Planetenrad der ersten Planetengetriebestufe festlegbar. Besonders von Vorteil ist die Erfindung für die schwimmende Lagerung der ersten und gegebenenfalls weiteren Sonnen. Die eintreibende Welle ist zur abtreibenden Welle koaxial ausgerichtet und auch zu der oder den Sonnen. Bei einer solch schwimmenden Lagerung hat die erste oder auch jede der Sonnen ein nichtverschwindendes, axiales Spiel. Beispielsweise beträgt das Spiel einen Millimeter. Da die eintreibende Welle mindestens mit einem Festlager und die abtreibende Welle im Wesentlichen ebenfalls mit einem Festlager gelagert ist, verbleibt für die erste Sonne oder den gesamten Strang der Sonnen das genannte axiale Spiel. Erfindungsgemäß sind zwar an der abtreibenden Welle und gegebenenfalls an den ber die erste Welle hinaus vorhandenen weiteren Sonnen jeweils stirnseitig ein Rillenkugellager angeordnet, jedoch weist die erste Sonne zur eintreibenden Welle hin kein Rillenkugellager auf, sondern das über die Federvorrichtung vorgespannt angeordnete Plattenteil. Wenn nun thermisch bedingt oder durch Stöße das axiale Spiel der ersten Sonne oder des aus den Sonnen gebildeten Strangs verringert ist, wird durch das vorgespannte Plattenteil und die an der eintreibenden Welle eintretende Berührung des Plattenteils die erste Sonne und auch ihr Zapfenbereich von der eintreibenden Welle beabstandet. Dabei kann die erste Sonne dann zur abtreibenden Welle hin verschoben werden, insbesondere indem die erste Sonne auf das stirnseitig an der zweiten Sonne angeordnete Rillenkugellager drückt und diese zweite Sonne somit zur abtreibenden Welle hin verschoben wird, insbesondere auf ein stirnseitig an der dritten Sonne angeordnetes Rillenkugellager, so dass die dritte Sonne dann auf das and er abtreibenden Welle stirnseitig angeordnete Rillenkugellager geschoben wird.

Auf diese Weise ist vorteilhafterweise die erste Sonne axial positioniert und gegebenenfalls auch die weiteren Sonnen, so dass ein Kantentagen beim jeweiligen Eingriff mit jeweiligen Planetenrädern verhinderbar ist. Dadurch ist eine hohe Standzeit erreichbar.

Alternativ ist auch ein verschwindendes Axialspiel realisierbar, so dass das Plattenteil den aus den Sonnen gebildeten Strang zumindest geringfügig vorspannt und dadurch eine axiale Positionierung aller Sonnen erzwungen wird.

Bei einer vorteilhaften Ausgestaltung weist die eintreibende Welle eine Bohrung, insbesondere Axialbohrung, auf,
wobei der Zapfenabschnitt in die Bohrung hineinragt, insbesondere in der Bohrung aufgenommen ist. Von Vorteil ist dabei, dass eine eintreibende Welle in einfacher Weise mit der ersten Sonne drehfest verbindbar ist.

Bei einer vorteilhaften Ausgestaltung liegt das Plattenteil an einer Stufe der als Stufenbohrung ausgeführten Bohrung an. Von Vorteil ist dabei, dass Axialstöße gedämpft werden und die axiale Positionierung gesichert ist.

Bei einer vorteilhaften Ausgestaltung ist die Gewindebohrung mittig in den Zapfenabschnitt, insbesondere zylindrischen Zapfenabschnitt, und/oder axial gerichtet eingebracht. Von Vorteil ist dabei, dass eine einfache Herstellung ermöglicht ist.

Bei einer vorteilhaften Ausgestaltung weist der Zapfenabschnitt eine Außenverzahnung auf, welche in die Bohrung, insbesondere in die Wandung der Bohrung, eingeschnitten ist oder welche im Eingriff ist mit einer in der Bohrung angeordneten Innenverzahnung der eintreibenden Welle. Von Vorteil ist dabei, dass die drehfeste Verbindung gleichzeitig Kupplungsfunktion aufweist.

Bei einer vorteilhaften Ausgestaltung ist das Plattenteil rotationssymmetrisch, insbesondere bezogen auf die Drehachse der ersten Sonne. Von Vorteil ist dabei, dass eine einfache Herstellung ermöglicht ist.

Bei einer vorteilhaften Ausgestaltung weist die erste Sonne eine Verzahnung auf, welche mit der Verzahnung eines ersten Planetenrads im Eingriff ist, die mit der Innenverzahnung eines ersten Hohlrades im Eingriff ist, das mit einem Gehäuseteil des Getriebes fest verbunden oder einstückig, insbesondere also einteilig, ausgeführt ist. Von Vorteil ist dabei, dass die Erfindung bei einem Planetengetriebe eine längere Standzeit bewirkt.

Bei einer vorteilhaften Ausgestaltung ist das erste Planetenrad auf einem Bolzen eines ersten Planetenträgers drehbar gelagert, der drehbar gelagert ist und mit einer zweiten Sonne drehfest verbunden ist. Von Vorteil ist dabei, dass eine kostengünstige Herstellung ermöglicht ist.

Bei einer vorteilhaften Ausgestaltung weist die zweite Sonne einen Zapfenbereich auf, welcher eine Außenverzahnung aufweist, die in eine Bohrung des ersten Planetenträgers eingeschnitten ist oder mit einer Innenverzahnung des ersten Planetenträgers im Eingriff ist,
wobei im Zapfenbereich der zweiten Sonne eine erste Ringnut und eine zweite insbesondere von der ersten Ringnut axial beabstandete zweite Ringnut eingebracht ist,
wobei in der ersten Ringnut ein erster Sicherungsring aufgenommen ist und in der zweiten Ringnut ein zweiter Sicherungsring aufgenommen ist,
wobei die Außenverzahnung in axialer Richtung zwischen dem ersten und zweiten Sicherungsring angeordnet ist, insbesondere so, dass die zweite Sonne zum ersten Planetenträger in axialer Richtung festgelegt ist. Von Vorteil ist dabei, dass eine einfache Herstellung ermöglicht ist.

Bei einer vorteilhaften Ausgestaltung wird das Plattenteil von der Federvorrichtung auf die eintreibende Welle, insbesondere auf die Stufe der als Stufenbohrung ausgeführten Bohrung der eintreibenden Welle, gedrückt. Von Vorteil ist dabei, dass das Plattenteil vorgespannt an der eintreibenden Welle anliegt und somit die axiale Position der ersten Welle vorgespannt ist. Insbesondere wird die erste Sonne gegen die zweite Sonne gedrückt, welche mittels der Sicherungsringe relativ zum ersten Planetenträger gesichert ist. Auf diese Weise ist somit ein Kantentragen verhinderbar und daher eine hohe Standzeit erreichbar.

Bei einer vorteilhaften Ausgestaltung ist die Federvorrichtung zwischen dem Plattenteil und der ersten Sonne und/oder dem Zapfenabschnitt angeordnet. Von Vorteil ist dabei, dass das Plattenteil von der Federvorrichtung an die eintreibende Welle angedrückt wird und die erste Sonne gegen die zweite Sonne gedrückt wird, die aber mittels Sicherheitsringen am ersten Planetenrädern axial gesichert ist. Die zweite Sonne ist dabei mittels eines Rillenkugellagers drehbar zur ersten Sonne lagerbar. Insbesondere ist das Rillenkugellager axial zwischen der ersten und zweiten Sonne anordenbar.

Bei einer vorteilhaften Ausgestaltung umfasst bezogen auf die Drehachse der ersten Sonne der von dem Zapfenabschnitt und/oder von der ersten Sonne überdeckte Radialabstandsbereich den von dem Plattenteil überdeckten Radialabstandsbereich.

Bei einer vorteilhaften Ausgestaltung sind das Plattenteil, die Federvorrichtung und die mindestens eine Distanzscheibe in einer Bohrung des Zapfenabschnitts aufgenommen und/oder eingesenkt,
welche zusammen mit der Gewindebohrung eine weitere Stufenbohrung bildet, insbesondere im Zapfenabschnitt. Von Vorteil ist dabei, dass eine elastische Vorspannung zwischen dem Plattenteil und der ersten Sonne bewirkbar ist.

Bei einer vorteilhaften Ausgestaltung ist die eintreibende Welle mittels zweier Lager drehbar gelagert, welche im Gehäuse des Planetengetriebes aufgenommen sind. Von Vorteil ist dabei, dass eine einfache Herstellung ausführbar ist. Außerdem ist die erste Sonne über die eintreibende Welle drehbar gelagert sowie über die mit der ersten Sonne im Eingriff sich befindenden Verzahnungen der mindestens drei ersten Planetenräder, da diese in Umfangsrichtung möglichst regelmäßig voneinander beabstandet sind.

Alternativ ist nur eines der Lager im Gehäuse des Planetengetriebes aufgenommen und das andere in einem Elektromotor, welcher eintriebsseitig mit dem Planetengetriebe verbunden wird und dessen Rotorwelle drehfest mit der eintreibenden Welle verbunden oder weiter alternativ einstückig ausgeführt wird.

Bei einer vorteilhaften Ausgestaltung ist das Plattenteil aus Metall gefertigt. Von Vorteil ist dabei, dass eine hohe Standzeit erreichbar ist.

Bei einer vorteilhaften Ausgestaltung ist der Außendurchmesser, der insbesondere größte Außendurchmesser, des Zapfenabschnitts kleiner als der Außendurchmesser der mit der Verzahnung des Planetenrads in Eingriff sich befindenden Verzahnung der ersten Sonne.

Von Vorteil ist dabei, dass der zapfenabschnitt nur geringfügig zum Trägheitsmoment der ersten Sonne beiträgt.

Weitere Vorteile ergeben sich aus den Unteransprüchen.

Die Erfindung wird nun anhand von schematischen Abbildungen näher erläutert:

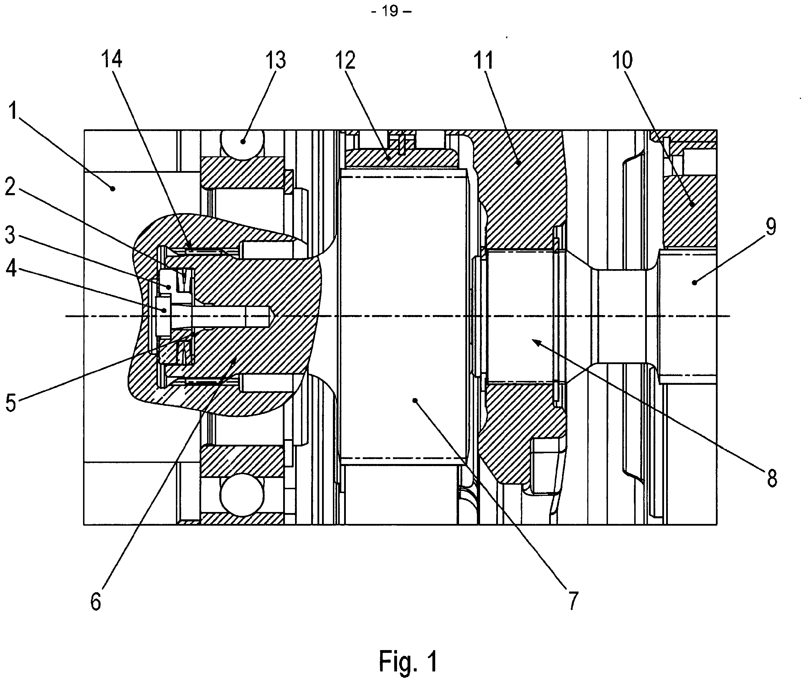

In der Figur 1 ist ein Bereich eines mehrstufigen Planetengetriebes gezeigt, wobei eine Abstandshalterung in eine erste Sonne 7 eingeschraubt ist.
In der Figur 2 ist die Abstandshalterung in Schrägansicht dargestellt.

Wie in den Figuren dargestellt, ist eine eintreibende Welle 1 mit einer ersten Sonne 7 drehfest verbunden.

Hierzu weist in einer ersten Ausführung die eintreibende Welle 1 in der den Zapfenabschnitt 6 aufnehmenden Bohrung eine Innenverzahnung auf, welche mit einer Außenverzahnung des Zapfenabschnitts 6 nach Einstecken des Zapfenabschnitts 6 der ersten Sonne 7 in die Bohrung der eintreibenden Welle 1, insbesondere in die Innenverzahnung, im Eingriff ist, insbesondere in Umfangsrichtung spielbehaftet.

Alternativ zur ersten Ausführung wird bei einer zweiten Ausführung der Zapfenabschnitt 6 der ersten Sonne 7 in die Bohrung der eintreibenden Welle 1 eingepresst. Der Zapfenabschnitt 6 der ersten Sonne 7 weist hierbei eine Außenverzahnung auf, die beim Einpressen sich in das Material der eintreibenden Welle 1 einschneidet. Somit ist eine spielfreie Verbindung erreicht.

In beiden genannten Ausführungen ist die eintreibende Welle 1 mit dem Zapfenabschnitt 6 drehfest verbunden.

Um in axialer Richtung eine Beabstandung zu erreichen, ist eine Schraube 4 in eine Gewindebohrung des Zapfenabschnitts 6 eingeschraubt. Dabei ist die Bohrungsachse der Gewindebohrung koaxial zur Drehachse des Zapfenabschnitts 6 und/oder der ersten Sonne 7 ausgerichtet.

Der Schraubenkopf der Schraube 4 drückt ein Plattenteil 3 zur ersten Sonne 7 hin auf eine zwischengeordnete Federvorrichtung 2, die über mindestens eine Distanzscheibe 5, insbesondere Passscheibe, auf den Zapfenabschnitt 6 gedrückt wird.

Der Gewindeabschnitt der Schraube 4 ist hierzu durch das Plattenteil 3 und durch die Federvorrichtung 2 sowie die mindestens eine Distanzscheibe 5 hindurchgesteckt.

Der Schraubenkopf ist im Plattenteil 3 versenkt angeordnet. Hierzu weist das Plattenteil 3 eine entsprechende, insbesondere axial gerichtete, Vertiefung auf.

Die Federvorrichtung 2 ist mittels des Plattenteils 3 von der Schraube 4, insbesondere auch vom Gewindeabschnitt der Schraube 4 beabstandet.

Die Distanzscheiben 5 sind als Lochscheiben ausgeführt.

Die Anzahl der Distanzscheiben 5 ist eine natürliche Zahl, also mindestens Eins.

Die Anzahl der Distanzscheiben 5 und die Einschraubtiefe der Schraube 4 in die Gewindebohrung des Wellenzapfens 6 der ersten Sonne 7 sind derart gewählt, dass die Federvorrichtung 2 elastisch gespannt ist. Der Schraubenkopf drückt also das Plattenteil 3 derart weit zur ersten Sonne 7 hin, bis die über die Distanzscheiben 5 am Zapfenabschnitt 6 anstehende Federvorrichtung 2 vom Plattenteil 3 elastisch gespannt ist.

Da das Plattenteil 3 zur eintreibenden Welle 1 hin, insbesondere über den Schraubenkopf hinaus, hervorsteht und an der eintreibenden Welle 1 anstehen kann oder ansteht, werden axial gerichtete Schwingungen, die über die eintreibende Welle 1 eingeleitet werden, zum Zapfenabschnitt 6 hin abgedämpft. Zusätzlich oder alternativ können aber auch Schwingungen von der mit der Verzahnung der ersten Sonne und auch mit der Verzahnung des Hohlrads der ersten Planetengetriebestufe des Planetengetriebes im Eingriff sich befindenden Planetenradverzahnung erzeugt und eingeleitet werden.

Vorzugsweise weist die eintreibende Welle 1 als Bohrung eine Stufenbohrung auf, so dass der Schraubenkopf kein Material der eintreibenden Welle 1 berührt, insbesondere auch wenn das Plattenteil 3 an einer Stufe der Stufenbohrung anliegt und die Federvorrichtung 2 maximal komprimiert ist und somit der Schraubenkopf in den tiefsten Teil der Stufenbohrung der eintreibenden Welle 1 hineinragt.

Im Gehäuse des Planetengetriebes ist ein Lager 13 aufgenommen, welches die eintreibende Welle 1 drehbar lagert.

Die erste Sonne 7 weist eine Außenverzahnung auf, welche im Eingriff steht mit der Verzahnung eines Planetenrads 12, das drehbar gelagert ist um einen Bolzenabschnitt eines Planetenträgers 11, in welchen ein Zapfenabschnitt 8 einer zweiten Sonne 9 eingesteckt und drehfest verbunden ist. Die Verzahnung des ersten Planetenrads 12 steht auch im Eingriff mit einer Innenverzahnung eines Hohlrads, das mit dem Gehäuse fest verbunden ist.

Erfindungsgemäß ist ein Kantentragen der Verzahnung der ersten Sonne 7 verhindert.

Die Verzahnung des zweiten Planetenrads 10 steht im Eingriff mit der Verzahnung der zweiten Sonne 9, wobei der Zapfenabschnitt 8 der zweiten Sonne mittels im Zapfenabschnitt 8 aufgenommener Sicherungsringe axial zum Planetenträger 11 positioniert ist

Die Verzahnung des zweiten Planetenrads 10 steht auch im Eingriff mit einer Innenverzahnung eines zweiten Hohlrads, das mit dem Gehäuse fest verbunden ist.

Die axiale Länge der Verzahnung der ersten Sonne 7 ist größer als die axiale Länge der Verzahnung des ersten Planetenrads 12. Die erste Sonne 7 ist also in axialer Richtung schwimmend angeordnet.

Dasjenige der beiden Lager der eintreibenden Welle 1, welches näher ist zur ersten Sonne 7, ist als Festlager ausgeführt. Das andere ist als Loslager ausgeführt.

Ebenso ist die in den Figuren nicht dargestellte abtreibende Welle fest gelagert oder nur mit einem geringen Spiel gelagert. Im Wesentlichen ist somit die axiale Position der abtreibenden Welle feststehend.

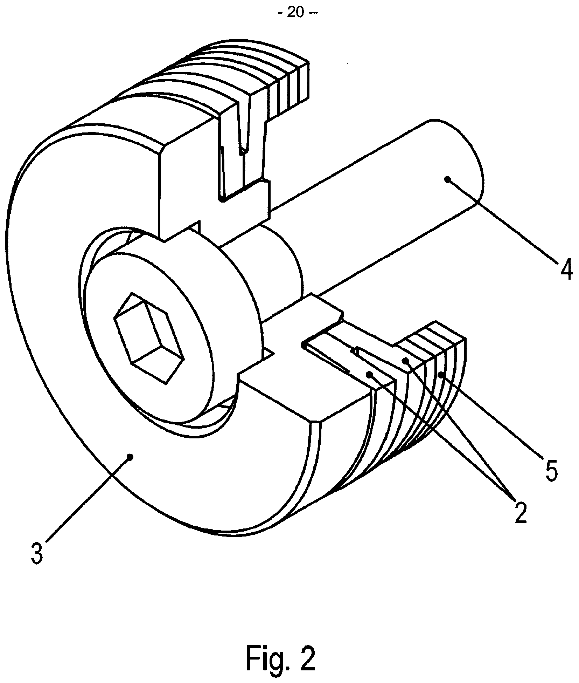

Wie in Figur 2 ersichtlich sind als Federvorrichtung zwei spiegelverkehrt zueinander angeordnete Tellerfedern verwendbar. Alternativ ist aber auch nur eine einzige Tellerfeder verwendbar oder ein Stapel von Tellerfedern.

Da am Plattenteil 3 ein Innenkragen axial zum Zapfenabschnitt 6 der ersten Sonne 7 hervorragt, ist die Federvorrichtung 2 zentriert gehalten und geführt.

Der Außendurchmesser des Schraubenkopfes ist kleiner als der lichte Innendurchmesser der Federvorrichtung 2. Somit ist auch das Plattenteil 3 elastisch verformt, wenn die Schraube 4 in die Gewindebohrung eingeschraubt ist.

Bei weiteren erfindungsgemäßen Ausführungsbeispielen wird ein Rillenkugellager im Zapfenabschnitt 8 der zweiten Sonne 9 aufgenommen und lagert den zweiten Zapfenabschnitt 8 drehbar zur ersten Sonne 7, wobei somit auch für einen Mindestabstand gesorgt ist.

Die jeweilige Sonne ist auch als Sonnenrad bezeichenbar.

Im erfindungsgemäßen Ausführungsbeispiel sind die in axialer Richtung hintereinander angeordneten Sonnen 7 und 9 schwimmend angeordnet, insbesondere haben also in axialer Richtung einen Spielraum.

Die jeweils nächste Sonne 9 hat zur vorherigen Sonne ein stirnseitiges Rillenkugellager, so dass bei Berührung eine nur geringe Reibungswärme infolge der unterschiedlichen Drehzahlen erzeugt wird. Die letzte Sonne ist ebenfalls mittels eines stirnseitig an der abtreibenden Welle, also dem letzten Planetenträger, angeordneten Rillenkugellagers reibungsarm drehbar angeordnet.

Mittels der Federvorrichtung 2 ist also der gesamte, aus allen Sonnen (7, 9) gebildete Strang vorspannbar, wenn die Spielräume für die Sonnen entsprechend verringert würden. Denn die eintreibende Welle und die abtreibende Welle sind zum Strang hin axial fest positioniert.

Diese Verringerung der Spielräume ist entweder schon bei der Herstellung vorgesehen oder tritt bei Betrieb auf, beispielsweise durch Stöße, welche die axiale Position der eintreibenden Welle im Millimeterbereich zeitweise, insbesondere im Mikrosekundenbereich, verschieben.

Eine alternativ gewählte, dauerhafte Vorspannung im Strang verhindert ein Aufschlagen einer Sonne auf ein Rillenkugellager. Somit kann unter Umständen auch eine dauerhafte Vorspannung vorteilhaft sein.

### Bezugszeichenliste

- 1: eintreibende Welle
- 2: Federvorrichtung
- 3: Plattenteil
- 4: Schraube
- 5: Distanzscheibe, insbesondere Passscheibe
- 6: Zapfenabschnitt der ersten Sonne 7
- 7: erste Sonne
- 8: Zapfenabschnitt der zweiten Sonne
- 9: zweite Sonne
- 10: zweites Planetenrad
- 11: erster Planetenträger
- 12: erster Planetenrad
- 13: Lager
- 14: Verzahnungsbereich

## Patentansprüche

1. Planetengetriebe mit einer eintreibenden Welle (1) und einer ersten Sonne (7),
wobei die erste Sonne (7) mit der eintreibenden Welle (1) drehfest verbunden ist,
wobei die erste Sonne (7) einen Zapfenabschnitt (6), insbesondere Wellenzapfen, aufweist,
**dadurch gekennzeichnet, dass**
eine Schraube (4) in eine Gewindebohrung des Zapfenabschnitts (6) eingeschraubt ist,
wobei der Schraubenkopf der Schraube (4) auf ein Plattenteil (3) drückt, das über eine Federvorrichtung (2) oder über eine Federvorrichtung (2) und mindestens eine Distanzscheibe (5) auf den Zapfenabschnitt (6) drückt.

2. Planetengetriebe nach Anspruch 1,
**dadurch gekennzeichnet, dass**
das Plattenteil (3), insbesondere an seiner von der Federvorrichtung (2) abgewandten Seite, an der eintreibenden Welle (1) anliegt und/oder die eintreibende Welle (1), insbesondere zumindest zeitweise, berührt.

3. Planetengetriebe nach Anspruch 1 oder 2,
**dadurch gekennzeichnet, dass**
die eintreibende Welle (1) eine Bohrung, insbesondere Axialbohrung, aufweist,
wobei der Zapfenabschnitt (6) in die Bohrung hineinragt, insbesondere in der Bohrung aufgenommen ist.

4. Planetengetriebe **nach Anspruch 3,**
**dadurch gekennzeichnet, dass**
das Plattenteil (3) an einer Stufe der als Stufenbohrung ausgeführten Bohrung anliegt, insbesondere zumindest zeitweise,
und/oder dass
die Gewindebohrung mittig in den Zapfenabschnitt (6), insbesondere zylindrischen Zapfenabschnitt (6), und/oder axial gerichtet eingebracht ist.

5. Planetengetriebe **nach Anspruch 3 oder 4,**
**dadurch gekennzeichnet, dass**
der Zapfenabschnitt (6) eine Außenverzahnung aufweist, welche in die Bohrung, insbesondere in die Wandung der Bohrung, eingeschnitten ist oder welche im Eingriff ist mit einer in der Bohrung angeordneten Innenverzahnung der eintreibenden Welle (1).

6. Planetengetriebe nach einem der vorangegangenen Ansprüche,
**dadurch gekennzeichnet, dass**
das Plattenteil (3) rotationssymmetrisch ist, insbesondere bezogen auf die Drehachse der ersten Sonne.

7. Planetengetriebe nach einem der vorangegangenen Ansprüche,
**dadurch gekennzeichnet, dass**
die erste Sonne (7) eine Verzahnung aufweist, welche mit der Verzahnung eines ersten Planetenrads (12) im Eingriff ist, die mit der Innenverzahnung eines ersten Hohlrades im Eingriff ist, das mit einem Gehäuseteil des Getriebes fest verbunden oder einstückig, insbesondere also einteilig, ausgeführt ist.

8. Planetengetriebe nach einem der vorangegangenen Ansprüche,
**dadurch gekennzeichnet, dass**
das erste Planetenrad (12) auf einem Bolzen eines ersten Planetenträgers (11) drehbar gelagert ist, der drehbar gelagert ist und mit einer zweiten Sonne drehfest verbunden ist.

9. Planetengetriebe **nach Anspruch 8,**
**dadurch gekennzeichnet, dass**
die zweite Sonne einen Zapfenbereich aufweist, welcher eine **weitere** Außenverzahnung aufweist, die in eine Bohrung des ersten Planetenträgers (11) eingeschnitten ist oder mit einer Innenverzahnung des ersten Planetenträgers (11) im Eingriff ist,
wobei im Zapfenbereich der zweiten Sonne eine erste Ringnut und eine zweite insbesondere von der ersten Ringnut axial beabstandete zweite Ringnut eingebracht ist,
wobei in der ersten Ringnut ein erster Sicherungsring aufgenommen ist und in der zweiten Ringnut ein zweiter Sicherungsring aufgenommen ist,
wobei die Außenverzahnung in axialer **Richtung** zwischen dem ersten und zweiten Sicherungsring angeordnet ist, insbesondere so, dass die zweite Sonne zum ersten Planetenträger (11) in axialer Richtung festgelegt ist.

10. Planetengetriebe nach einem der vorangegangenen Ansprüche,
**dadurch gekennzeichnet, dass**
das Plattenteil (3) von der Federvorrichtung (2) auf die eintreibende Welle (1), insbesondere auf die Stufe der als Stufenbohrung ausgeführten Bohrung der eintreibenden Welle (1), drückt, insbesondere zumindest zeitweise.

11. Planetengetriebe nach einem der vorangegangenen Ansprüche,
**dadurch gekennzeichnet, dass**
die Federvorrichtung (2) zwischen dem Plattenteil (3) und der ersten Sonne (7) und/oder dem Zapfenabschnitt (6) angeordnet ist.

12. Planetengetriebe nach einem der vorangegangenen Ansprüche,
**dadurch gekennzeichnet, dass**
bezogen auf die Drehachse der ersten Sonne (7) der von dem Zapfenabschnitt (6) und/oder von der ersten Sonne (7) überdeckte Radialabstandsbereich den von dem Plattenteil (3) überdeckten Radialabstandsbereich umfasst, insbesondere, dass sich der Zapfenabschnitt (6) radial weiter erstreckt als das Plattenteil (3).

13. Planetengetriebe nach einem der vorangegangenen Ansprüche,
**dadurch gekennzeichnet, dass**
das Plattenteil (3), die Federvorrichtung (2) und die mindestens eine Distanzscheibe (5) in einer Bohrung des Zapfenabschnitts (6) aufgenommen und/oder eingesenkt sind,
welche zusammen mit der Gewindebohrung eine weitere Stufenbohrung bildet, insbesondere im Zapfenabschnitt (6).

14. Planetengetriebe nach einem der vorangegangenen Ansprüche,
**dadurch gekennzeichnet, dass**
die eintreibende Welle (1) mittels zweier Lager (13) drehbar gelagert ist, welche im Gehäuse des Planetengetriebes aufgenommen sind,
und/oder dass
das Plattenteil (3) aus Metall gefertigt ist,
und/oder dass
der Außendurchmesser, der insbesondere größte Außendurchmesser, des Zapfenabschnitts (6) kleiner als der Außendurchmesser der mit der Verzahnung des Planetenrads (12) in Eingriff sich befindenden Verzahnung der ersten Sonne (7) ist.

15. Planetengetriebe **nach Anspruch 14,**
**dadurch gekennzeichnet, dass**
aus der ersten Sonne (7) und der oder den weiteren Sonnen ein Strang von in axialer Richtung hintereinander angeordneten, zueinander koaxial ausgerichteten Sonnen gebildet ist, wobei der Strang und/oder die Sonnen ein axiales Spiel zur Verfügung haben,
wobei die eintreibende Welle (1) und **eine** abtreibende Welle koaxial zu den Sonnen des Strangs angeordnet sind,
wobei das zum Strang nächstbenachbarte Lager (13) der eintreibenden Welle (1) als Festlager ausgeführt ist,
wobei das zum Strang nächstbenachbarte Lager (13) der abtreibenden Welle als Festlager ausgeführt ist.

## Claims

1. A planetary gear unit with an input shaft (1) and a first sun gear (7),
wherein the first sun gear (7) is connected non-rotatably to the input shaft (1),
wherein the first sun gear (7) has a journal portion (6), in particular shaft journal,
**characterised in that**
a screw (4) is screwed into a threaded bore of the journal portion (6),
with the screw head of the screw (4) pressing on a plate part (3) that presses on the journal portion (6) by way of a spring device (2), or by way of a spring device (2) and at least one spacer disc (5).

2. A planetary gear unit according to claim 1,
**characterised in that**
the plate part (3), in particular on its side which faces away from the spring device (2), bears against the input shaft (1) and/or contacts the input shaft (1), in particular at least at times.

3. A planetary gear unit according to claim 1 or 2,
**characterised in that**
the input shaft (1) has a bore, in particular axial bore,
with the journal portion (6) protruding into the bore, in particular being received in the bore.

4. A planetary gear unit according to claim 3,
**characterised in that**
the plate part (3) bears, in particular at least at times, against a step of the bore which is embodied as a stepped bore,
and/or **in that**
the threaded bore is formed centrally in the journal portion (6), in particular cylindrical journal portion (6), and/or is formed axially directed.

5. A planetary gear unit according to claim 3 or 4,
**characterised in that**
the journal portion (6) has external gearing which is cut into the bore, in particular into the wall of the bore, or which is meshed with internal gearing, arranged in the bore, of the input shaft (1).

6. A planetary gear unit according to one of the preceding claims,
**characterised in that**
the plate part (3) is rotationally symmetrical, in particular relative to the axis of rotation of the first sun gear.

7. A planetary gear unit according to one of the preceding claims,
**characterised in that**
the first sun gear (7) has gearing which is meshed with the gearing of a first planet wheel (12) that is meshed with the internal gearing of a first ring gear that is fixedly connected to a housing part of the gear unit or is embodied in one piece, in particular therefore in one part.

8. A planetary gear unit according to one of the preceding claims,
**characterised in that**
the first planet wheel (12) is rotatably mounted on a pin of a first pinion cage (11) that is rotatably mounted and is connected non-rotatably to a second sun gear.

9. A planetary gear unit according to claim 8,
**characterised in that**
the second sun gear has a journal region which has further external gearing that is cut into a bore of the first pinion cage (11) or is meshed with internal gearing of the first pinion cage (11),
with a first ring groove and a second ring groove, in particular second ring groove axially spaced apart from the first ring groove, being formed in the journal region of the second sun gear,
with a first securing ring being received in the first ring groove, and a second securing ring being received in the second ring groove,
with the external gearing being arranged in the axial direction between the first and second securing rings, in particular such that the second sun gear is fixed in the axial direction in relation to the first pinion cage (11).

10. A planetary gear unit according to one of the preceding claims,
**characterised in that**
the plate part (3) of the spring device (2) presses on the input shaft (1), in particular on the step of the bore which is embodied as a stepped bore, of the input shaft (1), in particular at least at times.

11. A planetary gear unit according to one of the preceding claims,
**characterised in that**
the spring device (2) is arranged between the plate part (3) and the first sun gear (7) and/or the journal portion (6).

12. A planetary gear unit according to one of the preceding claims,
**characterised in that**
relative to the axis of rotation of the first sun gear (7), the radial distance region covered by the journal portion (6) and/or by the first sun gear (7) encompasses the radial distance region covered by the plate part (3), in particular **in that** the journal portion (6) extends radially farther than the plate part (3).

13. A planetary gear unit according to one of the preceding claims,
**characterised in that**
the plate part (3), the spring device (2) and the at least one spacer disc (5) are received and/or sunk in a bore of the journal portion (6)
which together with the threaded bore forms a further stepped bore, in particular in the journal portion (6).

14. A planetary gear unit according to one of the preceding claims,
**characterised in that**
the input shaft (1) is rotatably mounted by means of two bearings (13) which are received in the housing of the planetary gear unit,
and/or **in that**
the plate part (3) is manufactured from metal,
and/or **in that**
the external diameter, the in particular greatest external diameter, of the journal portion (6) is less than the external diameter of the gearing of the first sun gear (7) that meshes with the gearing of the planet wheel (12).

15. A planetary gear unit according to claim 14,
**characterised in that**
from the first sun gear (7) and the further sun gear or sun gears there is formed a train of sun gears arranged one behind another in the axial direction and aligned coaxially with each other, with the train and/or the sun gears having axial play available,
with the input shaft (1) and an output shaft being arranged coaxially with the sun gears of the train,
with the bearing (13) of the input shaft (1) next adjacent to the train being embodied as a fixed bearing,
with the bearing (13) of the output shaft next adjacent to the train being embodied as a fixed bearing.

## Revendications

1. Engrenage planétaire comprenant un arbre d'entrée (1) et un premier soleil (7),
le premier soleil (7) étant relié solidaire en rotation à l'arbre d'entrée (1),
le premier soleil (7) présentant une section de tourillon (6), en particulier un tourillon d'arbre,
**caractérisé en ce que**
une vis (4) est vissée dans un alésage fileté de la section de tourillon (6),
la tête de vis de la vis (4) appuyant sur une partie plaque (3) qui appuie sur la section de tourillon (6) par l'intermédiaire d'un dispositif à ressort (2) ou par l'intermédiaire d'un dispositif à ressort (2) et d'au moins une rondelle d'écartement (5).

2. Engrenage planétaire selon la revendication 1,
**caractérisé en ce que**
la partie plaque (3), en particulier sur son côté opposé au dispositif à ressort (2), repose contre l'arbre d'entrée (1) et/ou touche l'arbre d'entrée (1), en particulier au moins temporairement.

3. Engrenage planétaire selon la revendication 1 ou 2,
**caractérisé en ce que**
l'arbre d'entrée (1) présente un alésage, en particulier un alésage axial,
la section de tourillon (6) fait saillie dans l'alésage, en particulier est accueillie dans l'alésage.

4. Engrenage planétaire selon la revendication 3,
**caractérisé en ce que**
la partie plaque (3) repose, en particulier au moins temporairement, contre un étage de l'alésage réalisé sous la forme d'un alésage étagé,
et/ou **en ce que**
l'alésage fileté est inséré de manière centrale dans la section de tourillon (6), en particulier dans la section de tourillon (6) cylindrique, et/ou en étant orienté de manière axiale.

5. Engrenage planétaire selon la revendication 3 ou 4,
**caractérisé en ce que**
la section de tourillon (6) présente une denture extérieure qui est découpée dans l'alésage, en particulier dans la paroi de l'alésage, ou qui est en prise avec une denture intérieure, agencée dans l'alésage, de l'arbre d'entrée (1).

6. Engrenage planétaire selon l'une quelconque des revendications précédentes,
**caractérisé en ce que**
la partie plaque (3) est symétrique en rotation, en particulier par rapport à l'axe de rotation du premier soleil.

7. Engrenage planétaire selon l'une quelconque des revendications précédentes,
**caractérisé en ce que**
le premier soleil (7) présente une denture qui est en prise avec la denture d'une première roue planétaire (12) en prise avec la denture intérieure d'une première roue creuse qui est reliée de manière fixe à une partie carter de l'engrenage ou qui est réalisée d'un seul tenant, en particulier d'une seule pièce, avec ladite partie carter.

8. Engrenage planétaire selon l'une quelconque des revendications précédentes,
**caractérisé en ce que**
la première roue planétaire (12) est montée rotative sur un boulon d'un premier porte-satellites (11) qui est monté rotatif et est relié de manière solidaire en rotation à un deuxième soleil.

9. Engrenage planétaire selon la revendication 8,
**caractérisé en ce que**
le deuxième soleil présente une région de tourillon qui présente une autre denture extérieure qui est découpée dans un alésage du premier porte-satellites (11) ou qui est en prise avec une denture intérieure du premier porte-satellites (11),
une première rainure annulaire et une deuxième rainure annulaire, en particulier espacée axialement par rapport à la première rainure annulaire, sont insérées dans la région de tourillon du deuxième soleil,
une première bague de blocage étant accueillie dans la première rainure annulaire et une deuxième bague de blocage étant accueillie dans la deuxième rainure annulaire, la denture extérieure étant agencée entre les première et deuxième bagues de blocage dans la direction axiale, en particulier de manière à ce que le deuxième soleil soit établi par rapport au premier porte-satellites (11) dans la direction axiale.

10. Engrenage planétaire selon l'une quelconque des revendications précédentes,
**caractérisé en ce que**
la partie plaque (3) du dispositif à ressort (2) appuie, en particulier au moins temporairement, sur l'arbre d'entrée (1), en particulier sur l'étage de l'alésage, réalisé sous forme d'un alésage étagé, de l'arbre d'entrée (1).

11. Engrenage planétaire selon l'une quelconque des revendications précédentes,
**caractérisé en ce que**
le dispositif à ressort (2) est agencé entre la partie plaque (3) et le premier soleil (7) et/ou la section de tourillon (6).

12. Engrenage planétaire selon l'une quelconque des revendications précédentes,
**caractérisé en ce que**
par rapport à l'axe de rotation du premier soleil (7), la région d'espacement radial recouverte par la section de tourillon (6) et/ou par le premier soleil (7) comprend la région d'espacement radial recouverte par la partie plaque (3), en particulier **en ce que** la section de tourillon (6) s'étend radialement plus loin que la partie plaque (3).

13. Engrenage planétaire selon l'une quelconque des revendications précédentes,
**caractérisé en ce que**
la partie plaque (3), le dispositif à ressort (2) et la au moins une rondelle d'écartement (5) sont accueillis et/ou enfoncés dans un alésage de la section de tourillon (6),
qui forme avec l'alésage fileté un autre alésage étagé, en particulier dans la section de tourillon (6).

14. Engrenage planétaire selon l'une quelconque des revendications précédentes,
**caractérisé en ce que**
l'arbre d'entrée (1) est monté rotatif au moyen de deux paliers (13) qui sont accueillis dans le carter de l'engrenage planétaire,
et/ou **en ce que**
la partie plaque (3) est fabriquée en métal,
et/ou **en ce que**
le diamètre extérieur, en particulier le plus grand diamètre extérieur, de la section de tourillon (6) est inférieur au diamètre extérieur de la denture du premier soleil (7) se trouvant en prise avec la denture de la roue planétaire (12).

15. Engrenage planétaire selon la revendication 14,
**caractérisé en ce que**
un train de soleils agencés les uns derrière les autres dans la direction axiale et orientés de manière coaxiale les uns par rapport aux autres est formé à partir du premier soleil (7) et de l'autre ou des autres soleil(s), le train et/ou les soleils présentant un jeu axial,
l'arbre d'entrée (1) et un arbre de sortie étant agencés de manière coaxiale par rapport aux soleils du train,
le palier (13), situé le plus proche du train, de l'arbre d'entrée (1) étant réalisé sous la forme d'un palier fixe,
le palier (13), situé le plus proche du train, de l'arbre de sortie étant réalisé sous la forme d'un palier fixe.
